# EUROPEAN PATENT APPLICATION

(11) **EP 4 753 168 A1**
(43) Date of publication of application: **03.06.2026**
(21) Application number: 24870767.1
(22) Date of filing: 25.09.2024
(51) Int. Cl.: H04B 7/185

(54) **SATELLITE COMMUNICATION METHOD AND APPARATUS**

(30) Priority: 26.09.2023 CN 202311254443
(71) Applicant: HUAWEI TECHNOLOGIES CO., LTD., Shenzhen 518129 (CN)
(72) Inventor: CHEN, Ying, Shenzhen, Guangdong 518129 (CN); ZHANG, Jiayin, Shenzhen, Guangdong 518129 (CN); WANG, Jun, Shenzhen, Guangdong 518129 (CN)
(74) Representative: MERH-IP Matias Erny Reichl Hoffmann Patentanwälte PartG mbB
(86) International application number: PCT/CN2024/121054
(87) International publication number: WO 2025/067223

(57) **Abstract**

A satellite communication method and apparatus are provided, and are applied to the field of communication technologies. The method includes: A first communication apparatus reports first duration information, and then may report second duration information when GNSS validity duration of the first communication apparatus changes. Correspondingly, a second communication apparatus may receive the first duration information and the second duration information. The first duration information may indicate first remaining GNSS validity duration of the first communication apparatus, and the first remaining GNSS validity duration is determined based on the GNSS validity duration of the first communication apparatus. The second duration information may indicate second remaining GNSS validity duration of the first communication apparatus, and the second remaining GNSS validity duration is determined based on changed GNSS validity duration. The method can effectively increase communication duration of the first communication apparatus.

## Description

This application claims priority to Chinese Patent Application No. 202311254443.9, filed with the China National Intellectual Property Administration on September 26, 2023 and entitled "SATELLITE COMMUNICATION METHOD AND APPARATUS", which is incorporated herein by reference in its entirety.

### TECHNICAL FIELD

This application relates to the field of communication technologies, and in particular, to a satellite communication method and an apparatus.

### BACKGROUND

Compared with terrestrial communication, satellite communication has unique advantages. For example, the satellite communication can provide wider coverage areas, and satellite base stations are not vulnerable to natural disasters or external forces. The satellite communication may be introduced to provide communication services for some areas that cannot be covered by terrestrial communication networks, such as oceans and forests; reliability of the communication can be enhanced, for example, it is ensured that airplanes, trains, and users on those transportation obtain better communication services; and more data transmission resources can be provided for the communication, to improve network rates. Therefore, supporting both the terrestrial communication and the satellite communication has great benefits in terms of wide coverage, reliability, multi-connection, and high throughput.

Currently, the satellite communication has been introduced into a 3rd generation partnership project (3rd generation partnership project, 3GPP) standard, is used as a communication scenario of 5th generation (5th generation, 5G) communication, and is referred to as a non-terrestrial network (non-terrestrial network, NTN). The NTN not only can support various 5G terminals, but also can support terminals of an internet of things (internet of things, IoT) type. A most distinguishing feature of satellite communication is high mobility and a large communication latency. Therefore, different from terrestrial communication, satellite communication requires a terminal to implement synchronization on a basis of uplink synchronization based on information such as a global navigation satellite system (global navigation satellite system, GNSS) or an ephemeris. For example, the terminal may maintain a connected state within specific validity duration after reporting GNSS information, and a terminal device enters an idle state after the GNSS fails.

However, in the foregoing method, the terminal device continuously initiates random access to enter the connected state and exit the connected state. Consequently, the terminal device cannot keep communication for a long period of time.

### SUMMARY

Embodiments of this application provide a satellite communication method and apparatus, to effectively increase communication duration of a terminal device.

According to a first aspect, an embodiment of this application provides a satellite communication method. The method is applied to a first communication apparatus, the first communication apparatus may be a terminal device, or may be a processor, a module, a chip, a chip system, or the like that is in the terminal device and that implements the method, and the method includes:
reporting first duration information, where the first duration information indicates first remaining global navigation satellite system GNSS validity duration of the first communication apparatus, and the first remaining GNSS validity duration is determined based on GNSS validity duration of the first communication apparatus; and reporting second duration information when the GNSS validity duration changes, where the second duration information indicates second remaining GNSS validity duration of the first communication apparatus, and the second remaining GNSS validity duration is determined based on changed GNSS validity duration.

In this embodiment of this application, for a same GNSS measurement, the first communication apparatus reports remaining GNSS validity duration again when the GNSS validity duration changes, so that a second communication apparatus can schedule, based on latest remaining GNSS validity duration, the first communication apparatus to perform the GNSS measurement. In this way, the first communication apparatus can continue to communicate with the second communication apparatus within a GNSS validity period, to implement long-time communication, and further avoid signaling overheads generated when the terminal device continuously enters a connected state and exits the connected state, thereby reducing signaling overheads.

In a possible implementation, the second duration information includes a value of the second remaining GNSS validity duration, or an index of the value of the second remaining GNSS validity duration; or the second duration information includes a difference between an end time of the first remaining GNSS validity duration and an end time of the second remaining GNSS validity duration, or an index of the difference; or the second duration information includes 1-bit indication information, the indication information indicates to shorten the first remaining GNSS validity duration, or the indication information indicates to prolong the first remaining GNSS validity duration, and the second remaining GNSS validity duration is D, where D is a real number greater than 0.

In a possible implementation, the first remaining GNSS validity duration is determined based on the GNSS validity duration and a first reference time.

In a possible implementation, the second remaining GNSS validity duration is determined based on the GNSS validity duration and a second reference time.

In a possible implementation, the second reference time is determined based on a time of reporting the second duration information, or the second reference time is the end time of the first remaining GNSS validity duration.

In a possible implementation, that the GNSS validity duration changes includes at least one of the following cases: a change value of the GNSS validity duration is greater than a threshold, and the GNSS validity duration becomes smaller.

In a possible implementation, the second duration information is further used by the first communication apparatus to request to perform a GNSS measurement.

In a possible implementation, the method further includes:
entering an idle state when GNSS measurement information is not received within the second remaining GNSS validity duration, where the GNSS measurement information is used to trigger the first communication apparatus to perform the GNSS measurement; or when GNSS measurement information is not received within the second remaining GNSS validity duration, starting a timer and performing the GNSS measurement; and when the GNSS measurement is completed within timing duration of the timer, continuing to communicate with a second communication apparatus, where a start time of the timer is the end time of the second remaining GNSS validity duration.

In a possible implementation, the method further includes:
performing the GNSS measurement when GNSS measurement information is received within the second remaining GNSS validity duration, where the GNSS measurement information is used to trigger the first communication apparatus to perform the GNSS measurement.

According to a second aspect, an embodiment of this application provides a satellite communication method. The method is applied to a second communication apparatus, the second communication apparatus may be a network device, or may be a processor, a module, a chip, or a chip system that is in the network device and that implements the method, and the method includes:
receiving first duration information, where the first duration information indicates first remaining global navigation satellite system GNSS validity duration of a first communication apparatus, and the first remaining GNSS validity duration is determined based on GNSS validity duration of the first communication apparatus; and receiving second duration information when the GNSS validity duration changes, where the second duration information indicates second remaining GNSS validity duration of the first communication apparatus, and the second remaining GNSS validity duration is determined based on changed GNSS validity duration.

In a possible implementation, the method further includes:
sending GNSS measurement information within the second remaining GNSS validity duration indicated by the second duration information, where the GNSS measurement information is used to trigger the first communication apparatus to perform a GNSS measurement.

In a possible implementation, the second duration information includes a value of the second remaining GNSS validity duration, or an index of the value of the second remaining GNSS validity duration; or the second duration information includes a difference between an end time of the first remaining GNSS validity duration and an end time of the second remaining GNSS validity duration, or an index of the difference; or the second duration information includes 1-bit indication information, the indication information indicates to shorten the first remaining GNSS validity duration, or the indication information indicates to prolong the first remaining GNSS validity duration, and the second remaining GNSS validity duration is D, where D is a real number greater than 0.

In a possible implementation, the first remaining GNSS validity duration is determined based on the GNSS validity duration and a first reference time.

In a possible implementation, the second remaining GNSS validity duration is determined based on the GNSS validity duration and a second reference time.

In a possible implementation, the second reference time is determined based on a time of reporting the second duration information, or the second reference time is the end time of the first remaining GNSS validity duration.

In a possible implementation, that the GNSS validity duration changes includes at least one of the following cases: a change value of the GNSS validity duration is greater than a threshold, and the GNSS validity duration becomes smaller.

In a possible implementation, the second duration information is further used by the first communication apparatus to request to perform the GNSS measurement.

According to a third aspect, an embodiment of this application provides a first communication apparatus, configured to perform the method according to any one of the first aspect or the possible implementations of the first aspect. The first communication apparatus includes a unit that performs the method according to any one of the first aspect or the possible implementations of the first aspect.

For example, the first communication apparatus may be a terminal device, a chip, or a functional module, and the chip or the functional module may be applied to the terminal device.

According to a fourth aspect, an embodiment of this application provides a second communication apparatus, configured to perform the method according to any one of the second aspect or the possible implementations of the second aspect. The second communication apparatus includes a unit that performs the method according to any one of the second aspect or the possible implementations of the second aspect.

For example, the second communication apparatus may be a network device, a chip, or a functional module, and the chip or the functional module may be applied to the network device.

According to a fifth aspect, an embodiment of this application provides a first communication apparatus. The first communication apparatus includes a processor, configured to perform the method according to any one of the first aspect or the possible implementations of the first aspect. Alternatively, the processor is configured to execute a program stored in a memory. When the program is executed, the method according to any one of the first aspect or the possible implementations of the first aspect is performed.

In a possible implementation, the memory is located outside the first communication apparatus.

In a possible implementation, the memory is located inside the first communication apparatus.

In this embodiment of this application, the processor and the memory may alternatively be integrated into one device. In other words, the processor and the memory may alternatively be integrated together. For example, the first communication apparatus may be a chip.

In a possible implementation, the first communication apparatus further includes a transceiver. The transceiver is configured to receive a signal or send a signal. For example, the transceiver may be further configured to send first duration information. For example, the transceiver may be further configured to send second duration information. For example, the transceiver may be further configured to receive GNSS measurement information. For example, the first communication apparatus may be a terminal device.

According to a sixth aspect, an embodiment of this application provides a second communication apparatus. The second communication apparatus includes a processor, configured to perform the method according to any one of the second aspect or the possible implementations of the second aspect. Alternatively, the processor is configured to execute a program stored in a memory. When the program is executed, the method according to any one of the second aspect or the possible implementations of the second aspect is performed.

In a possible implementation, the memory is located outside the second communication apparatus.

In a possible implementation, the memory is located inside the second communication apparatus.

In this embodiment of this application, the processor and the memory may alternatively be integrated into one device. In other words, the processor and the memory may alternatively be integrated together. For example, the second communication apparatus may be a chip.

In a possible implementation, the second communication apparatus further includes a transceiver. The transceiver is configured to receive a signal or send a signal. For example, the transceiver may be configured to receive first duration information. For example, the transceiver may be further configured to receive second duration information. For example, the transceiver may be further configured to send GNSS measurement information. For example, the second communication apparatus may be a network device.

According to a seventh aspect, an embodiment of this application provides a first communication apparatus. The first communication apparatus includes a logic circuit and an interface. The logic circuit is coupled to the interface. The interface is configured to input and/or output information. The logic circuit is configured to perform the method according to the first aspect or any possible implementation.

For example, that the interface is configured to input the information may include: The interface is configured to input GNSS measurement information. That the interface is configured to output the information may include: The interface is configured to output first duration information, second duration information, and the like. For example, the logic circuit is configured to determine first remaining GNSS validity duration and second remaining GNSS validity duration.

According to an eighth aspect, an embodiment of this application provides a second communication apparatus. The second communication apparatus includes a logic circuit and an interface. The logic circuit is coupled to the interface. The interface is configured to input and/or output information. The logic circuit is configured to perform the method according to the second aspect or any possible implementation.

For example, that the interface is configured to input the information includes: The interface is configured to input first duration information and second duration information. That the interface is configured to output the information includes: The interface is configured to output GNSS measurement information. For example, the logic circuit is configured to determine first remaining GNSS validity duration and second remaining GNSS validity duration.

According to a ninth aspect, an embodiment of this application provides a computer-readable storage medium. The computer-readable storage medium is configured to store a computer program, and when the computer program is run on a computer, the method according to any one of the first aspect, the second aspect, or the possible implementations of the first aspect and the second aspect is performed.

According to a tenth aspect, an embodiment of this application provides a computer program product. The computer program product includes a computer program or computer code, and when the computer program or the computer code is run on a computer, the method according to any one of the first aspect, the second aspect, or the possible implementations of the first aspect and the second aspect is performed.

According to an eleventh aspect, an embodiment of this application provides a computer program. When the computer program is run on a computer, the method according to any one of the first aspect, the second aspect, or the possible implementations of the first aspect and the second aspect is performed.

According to a twelfth aspect, an embodiment of this application provides a communication system. The communication system includes a first communication apparatus and a second communication apparatus, the first communication apparatus is configured to perform the method according to any one of the first aspect or the possible implementations of the first aspect, and the second communication apparatus is configured to perform the method according to any one of the second aspect or the possible implementations of the second aspect.

### BRIEF DESCRIPTION OF DRAWINGS

FIG. 1 is a diagram of an architecture of a communication system according to an embodiment of this application;
FIG. 2a is a diagram of a satellite communication system in a transparent transmission scenario according to an embodiment of this application;
FIG. 2b and FIG. 2c are diagrams of a satellite communication system in a regeneration scenario according to an embodiment of this application;
FIG. 3 is a schematic flowchart of a satellite communication method according to an embodiment of this application;
FIG. 4a is a diagram of reporting first remaining GNSS validity duration according to an embodiment of this application;
FIG. 4b is another diagram of reporting first remaining GNSS validity duration according to an embodiment of this application;
FIG. 4c is still another diagram of reporting first remaining GNSS validity duration according to an embodiment of this application;
FIG. 5 is a diagram in which a speed changes and GNSS validity duration is affected according to an embodiment of this application;
FIG. 6a is a diagram of reporting second remaining GNSS validity duration according to an embodiment of this application;
FIG. 6b is another diagram of reporting second remaining GNSS validity duration according to an embodiment of this application;
FIG. 6c is still another diagram of reporting second remaining GNSS validity duration according to an embodiment of this application;
FIG. 6d is still another diagram of reporting second remaining GNSS validity duration according to an embodiment of this application;
FIG. 7a is a diagram of reporting 1-bit indication information according to an embodiment of this application;
FIG. 7b is another diagram of reporting 1^{st}-bit indication information according to an embodiment of this application;
FIG. 8a is a diagram of a scenario of a satellite communication method according to an embodiment of this application;
FIG. 8b is a diagram of a scenario of a satellite communication method according to an embodiment of this application;
FIG. 9a is a diagram of a scenario of a satellite communication method according to an embodiment of this application;
FIG. 9b is a diagram of a scenario of a satellite communication method according to an embodiment of this application;
FIG. 10 is a diagram of a structure of a communication apparatus according to an embodiment of this application;
FIG. 11 is a diagram of a structure of another communication apparatus according to an embodiment of this application; and
FIG. 12 is a diagram of a structure of still another communication apparatus according to an embodiment of this application.

### DESCRIPTION OF EMBODIMENTS

For ease of understanding technical solutions of this application, the following further describes this application with reference to accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with the embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described herein may be combined with other embodiments.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. "At least one of the following" or a similar expression thereof means any combination of these items. For example, at least one of a, b, or c may represent: a, b, c, "a and b", "a and c", "b and c", or "a and b and c".

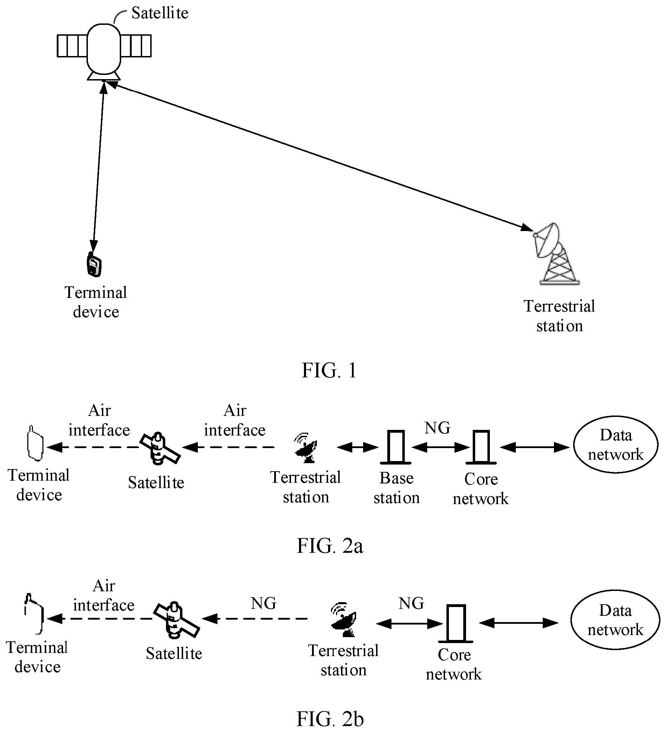

A method provided in embodiments of this application may be applied to a non-terrestrial network (non-terrestrial networks, NTN) communication system. As shown in FIG. 1, the communication system may include a terminal device, a satellite, and a terrestrial station (which may also be referred to as a gateway station or a gateway station). It may be understood that FIG. 1 shows only one satellite and one terrestrial station. In actual use, an architecture with a plurality of satellites and/or a plurality of terrestrial stations may be used according to a requirement. Each satellite may provide a service for one or more terminal devices, each satellite may correspond to one or more terrestrial stations, each terrestrial station may correspond to one or more satellites, and the like. This is not specifically limited in embodiments of this application. The method provided in embodiments of this application may be applied to an internet of things (internet of things, IoT) system, a vehicle-to-X (Vehicle-to-X, V2X), and a narrowband internet of things (narrowband internet of things, NB-IoT) system. For another example, the method may be applied to an LTE frequency division duplex (frequency division duplex, FDD) system, an LTE time division duplex (time division duplex, TDD) system, a long term evolution (long term evolution, LTE) system, a 5th generation (5th generation, 5G) communication system, a 6th generation (6th generation, 6G) communication system, or a future communication system. This is not specifically limited in embodiments of this application.

The terminal device is an apparatus having a wireless transceiver function. The terminal device may communicate with an access network device (or referred to as an access device) in a radio access network (radio access network, RAN). The terminal device may also be referred to as user equipment (user equipment, UE), an access terminal, a terminal (terminal), a subscriber unit (subscriber unit), a subscriber station, a mobile station, a remote station, a remote terminal, a mobile device, a user terminal, a user agent, a user apparatus, or the like. In a possible implementation, the terminal device may be deployed on land, including an indoor or outdoor terminal device, and a handheld or vehicle-mounted terminal device; or may be deployed on water (for example, on a ship). In a possible implementation, the terminal device may be a handheld device, a vehicle-mounted device, a wearable device, a sensor, a terminal in the internet of things, a terminal in the internet of vehicles, an uncrewed aerial vehicle, a terminal device in any form in a 5th generation (5th generation, 5G) network or a future network, or the like that has a wireless communication function. This is not limited in embodiments of this application. For example, communication may be further performed between terminal devices by using device-to-device (device-to-device, D2D) or machine-to-machine (machine-to-machine, M2M). The terminal device shown in embodiments of this application may alternatively be a device in the internet of things (internet of things, IoT). This IoT network may include, for example, the internet of vehicles. Communication manners in an internet of vehicles system are collectively referred to as vehicle-to-X (vehicle-to-X, V2X, where X may represent anything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

The terrestrial station may be configured to connect a satellite and a base station, or a satellite and a core network. The satellite may provide a radio access service to the terminal device, schedule a radio resource to an accessed terminal device, and provide a reliable radio transmission protocol, a data encryption protocol, and the like. In an example, the satellite may be an artificial earth satellite, a high-altitude aircraft, or the like that serves as a wireless communication base station, for example, an evolved NodeB (evolved NodeB, eNB) and a next generation NodeB (next generation NodeB, gNB). In another example, the satellite may alternatively serve as a relay of these base stations, and transparently transmit signals of these base stations to the terminal device.

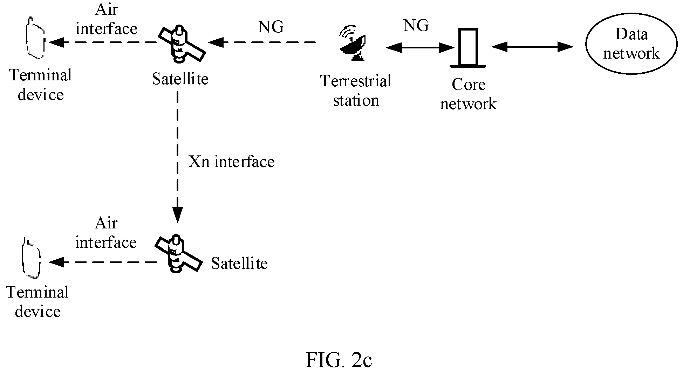

Therefore, in some implementations of this application, for example, in a satellite transparent transmission scenario, a network device may be the base station (which may also be referred to as a terrestrial base station) shown in FIG. 1. FIG. 2a is a diagram of a satellite communication system in a transparent transmission scenario according to an embodiment of this application. For example, a terminal device may access a network through an air interface (the air interface may be various types of air interfaces, for example, a 5G air interface), and a network device may be deployed on a terrestrial base station. A satellite is connected to a terrestrial station through a radio link. The terrestrial station and the terrestrial base station are connected to a core network in a wired or wireless manner. A radio link may exist between satellites. In the system shown in FIG. 2a, the satellite may have a transparent transmission and forwarding function. In some other implementations of this application, for example, in a regeneration scenario of the satellite, the network device may be the satellite shown in FIG. 1. FIG. 2b is a diagram of a satellite communication system in a regeneration scenario according to an embodiment of this application. For example, a terminal device may access a network through an air interface (the air interface may be various types of air interfaces, for example, a 5G air interface), and a network device may be deployed on a satellite (for example, in a regeneration mode of the satellite). For example, a base station or some functions of the base station are deployed on the satellite, and signaling exchange and user data transmission between base stations may be completed between satellites, as shown in FIG. 2c.

For example, network elements and interfaces between the network elements in FIG. 2a to FIG. 2c may be shown as follows.

The terminal device may access a satellite network through the air interface and initiates services such as calls and internet access. The base station may be configured to: provide a radio access service to the terminal device, schedule a radio resource to an accessed terminal device, and provide a reliable radio transmission protocol, a data encryption protocol, and the like. The terrestrial station may be configured to be responsible for forwarding signaling and service data between the satellite and the core network. The core network may be configured for user access control, mobility management, session management, user security authentication, charging, or the like. The core network may include a plurality of functional units, for example, functional entities including a control plane and a data plane. For example, the core network shown in FIG. 2a to FIG. 2c may include an access and mobility management function (access and mobility management function, AMF), a session management function (session management function, SMF), and a user plane function (user plane function, UPF). For example, the AMF may be configured to be responsible for user access management, security authentication, and mobility management. The UPF may be configured to be responsible for managing user plane data transmission and traffic statistics collection. The air interface shown in FIG. 2a to FIG. 2c may be understood as a radio link between a terminal and the base station, or a radio link between the satellite and the terrestrial station. An Xn interface may be understood as an interface between base stations, and is mainly configured to exchange signaling such as handover. An NG interface may be used as an interface between the base station and the core network, and is configured to exchange signaling such as non-access stratum (non-access stratum, NAS) signaling of the core network and service data of a user. In systems using different radio access technologies, names of devices having a base station function may be different, and are not shown one by one in embodiments of this application.

The satellite may be a geostationary earth orbit (geostationary earth orbit, GEO) satellite, a medium earth orbit (medium earth orbit, MEO) satellite or a low earth orbit (low earth orbit, LEO) satellite in a non-geostationary earth orbit (none-geostationary earth orbit, NGEO), a high altitude platform station (high altitude platform station, HAPS), or the like. A specific type of the satellite is not limited in embodiments of this application.

In some deployments of the network device, the network device may include a central unit (central unit, CU), a distributed unit (distributed unit, DU), and the like. In some other deployment of the network device, the CU may further include a CU-control plane (control plane, CP) and a CU-user plane (user plane, UP). In still some other deployments of the network device, the network device may alternatively be of an open radio access network (open radio access network, ORAN) architecture or the like. A specific deployment manner of the network device is not limited in embodiments of this application. For example, when the network device is of the ORAN architecture, the network device in embodiments of this application may be an access network device in an ORAN, a functional module, or the like. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the like. The deployment manner of the network device listed herein is merely an example. With evolution of a standard technology, the network device may have another deployment manner.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that with the evolution of the network architecture and the emergence of new service scenarios, the technical solutions and the network architecture provided in embodiments of this application are also applicable to similar technical problems.

Currently, there is a communication method based on a short-time connection. In the method, a terminal device initiates random access, and exits a connected state after sending uplink data. In this process, GNSS information obtained by the terminal device before random access has specific validity duration. The GNSS information can remain valid before the terminal device exits an RRC connected state, because a synchronization requirement can be met even when the terminal device moves and a GNSS deviation is caused by movement. For a terminal device of an IoT-type, because an IoT service is characterized by short-packet periodic transmission, the communication method based on a short-time connection may be effectively applied to a terminal device characterized by short-packet periodic transmission.

However, in the foregoing method, the GNSS information obtained by the terminal device has specific validity duration (validity duration). After the GNSS information expires, the terminal device cannot continue to ensure the connection; and needs to exit the connected state and enter an idle state, and then needs to obtain the GNSS information again to initiate random access. The terminal device performs random access for a plurality of times to enter the connected state, and exiting the connected state causes excessively high signaling overheads. Alternatively, when the terminal device is in the connected state for a long period of time, the GNSS information expires. Therefore, the terminal device needs to obtain the GNSS information again. However, when the terminal device obtains the GNSS information again, communication and a GNSS measurement cannot be performed simultaneously. For example, when the terminal device performs the GNSS measurement, and consequently, cannot perform communication (for example, cannot send uplink data or cannot receive downlink data), especially, for the IoT service, a data packet periodicity of the IoT service is short, and communication cannot be performed during the GNSS measurement, thereby greatly affecting normal communication of the IoT service. For example, the validity duration may be duration determined by the terminal device based on information such as a moving speed of the terminal device, a relative location relationship between the terminal device and a satellite (for example, in a central area or an edge area covered by the satellite), or a relative speed between the terminal device and the satellite, and then reported by the terminal device to a network device.

In view of this, embodiments of this application provide a satellite communication method and apparatus. On a basis of implementing uplink synchronization by a terminal device, communication duration of the terminal device can be increased (or referred to as that duration in which the terminal device is in a connected state is increased), so that the terminal device can implement long-time communication. In this way, signaling overheads generated when the terminal device continuously enters the connected state and exits the connected state can be further avoided. Therefore, signaling overheads are reduced.

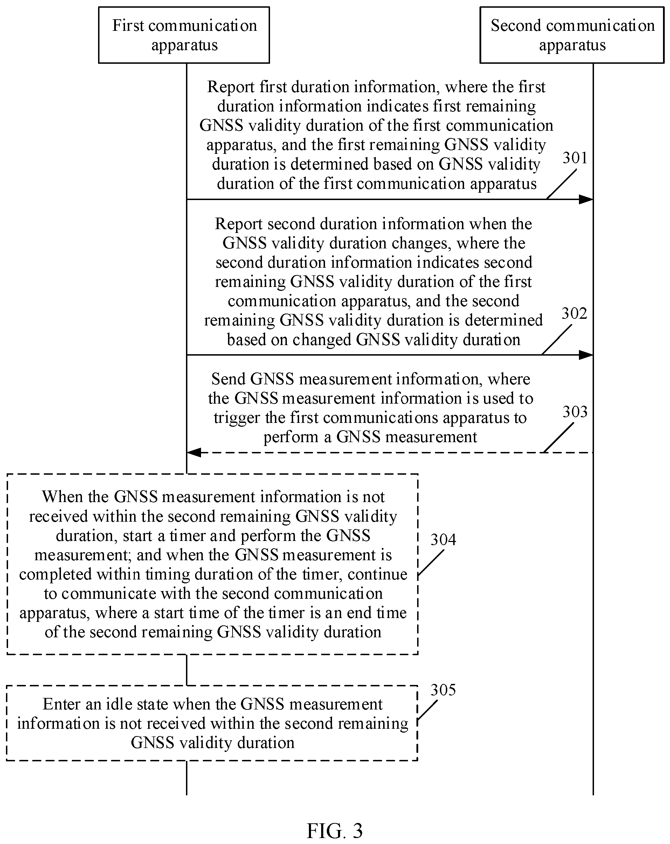

In the following satellite communication method (as shown in FIG. 3), a first communication apparatus may be a terminal device, a chip disposed in the terminal device, a functional module in the terminal device, or the like, and a second communication apparatus may be a network device, a chip disposed in the network device, or a functional module in the network device. As described above, the network device may include an access network device, a functional module, or the like in an O-RAN architecture. For detailed descriptions of the terminal device and the network device, refer to FIG. 1 and FIG. 2a to FIG. 2c. Details are not described herein again. For ease of description, in embodiments of this application, the terminal device and the network device may be used as examples for description in specific examples. However, the examples should not be construed as a limitation on embodiments of this application.

FIG. 3 is a schematic flowchart of a satellite communication method according to an embodiment of this application. As shown in FIG. 3, the method includes the following steps.

301: A first communication apparatus reports first duration information. Correspondingly, a second communication apparatus receives the first duration information. The first duration information indicates first remaining GNSS validity duration of the first communication apparatus, and the first remaining GNSS validity duration is determined based on GNSS validity duration of the first communication apparatus.

The following describes the GNSS validity duration shown in this embodiment of this application.

A GNSS measurement is a process of performing positioning based on a signal of a navigation satellite to obtain geographical location information. For example, the obtained geographical location information may be GNSS information, and the GNSS information may indicate information related to a geographical location of a terminal device, for example, coordinates X, Y, and Z, or information such as a longitude, a latitude, or a height. When obtaining the GNSS information, the first communication apparatus may obtain validity duration, for example, the GNSS validity duration, of the GNSS information based on a location relationship, a speed relationship, or the like between the first communication apparatus and a satellite. The location relationship between the first communication apparatus and the satellite may include that the first communication apparatus is located in a central area or an edge area of a satellite coverage area, or an orbital height or an elevation angle of the satellite. The speed relationship between the first communication apparatus and the satellite may include a relative speed relationship between the first communication apparatus and the satellite, a moving speed of the first communication apparatus, or the like. For example, a larger moving speed of the terminal device may lead to shorter GNSS validity duration. Therefore, the first communication apparatus may determine the GNSS validity duration after completing the GNSS measurement within a GNSS measurement gap. Within the GNSS validity duration, the first communication apparatus may maintain uplink synchronization, and may communicate with the second communication apparatus.

For example, the GNSS validity duration may be at a second level, a hundred-second level, a minute level, or an hour level. This is not limited in this embodiment of this application. For example, the GNSS validity duration may be any one of the following {10s, 20s, 30s, 40s, 50s, 60s, 5 min, 10 min, 15 min, 20 min, 25 min, 30 min, 60 min, 90 min, 120 min, infinity (infinity)}. Herein, min indicates minute, and s indicates second. For example, for a terminal device that does not move, or a terminal device with a small moving speed, for example, a terminal device whose moving speed is less than a threshold, GNSS information of the terminal device may be always valid. Therefore, the GNSS validity duration may be infinity. The foregoing enumerated GNSS validity duration is merely an example, and should not be construed as a limitation on this embodiment of this application.

The GNSS validity duration may also be referred to as a GNSS validity period, GNSS validity duration (GNSS validity duration), or the like. A specific name of the GNSS validity duration is not limited in this embodiment of this application.

The following describes the first remaining GNSS validity duration shown in this embodiment of this application.

Usually, the terminal device may perform the GNSS measurement within the GNSS measurement gap, and then report the GNSS validity duration. However, there is a specific time difference between a time at which the terminal device completes the GNSS measurement and obtains the GNSS validity duration and a time at which the GNSS measurement gap ends, or there is a specific time difference between a time at which the terminal device completes the GNSS measurement and obtains the GNSS validity duration and a time at which the terminal device performs reporting, or the terminal device may update the GNSS validity duration based on some update mechanisms. Therefore, the terminal device may precisely indicate remaining duration of the GNSS validity duration to a network device by reporting the first remaining GNSS validity duration. The remaining GNSS validity duration is reported more precisely, so that the network device can schedule, before a GNSS expires, the terminal device to perform the GNSS measurement, thereby prolonging communication duration of the terminal device as much as possible. The foregoing listed reason for reporting the first remaining GNSS validity duration by the terminal device is merely an example, and should not be construed as a limitation on this embodiment of this application.

In an example, the terminal device may report the GNSS validity duration before reporting the first duration information. The GNSS validity duration may include initial GNSS validity duration, and the initial GNSS validity duration is GNSS validity duration obtained by the first communication apparatus by performing the GNSS measurement. The first duration information reported by the terminal device may be remaining GNSS validity duration reported after the terminal device reports the GNSS validity duration. For example, the first duration information may be remaining GNSS validity duration reported for a first time after the terminal device reports the GNSS validity duration. In another example, the first duration information reported by the terminal device may alternatively be information reported for a first time after the terminal device completes the GNSS measurement.

For example, the first remaining GNSS validity duration may be determined based on the GNSS validity duration and a first reference time. The first reference time may be used to determine a start time or an end time of the first remaining GNSS validity duration. The first reference time may be defined in a protocol, or may be broadcast by the network device to each terminal device, or may be determined by the network device and then delivered to each terminal device.

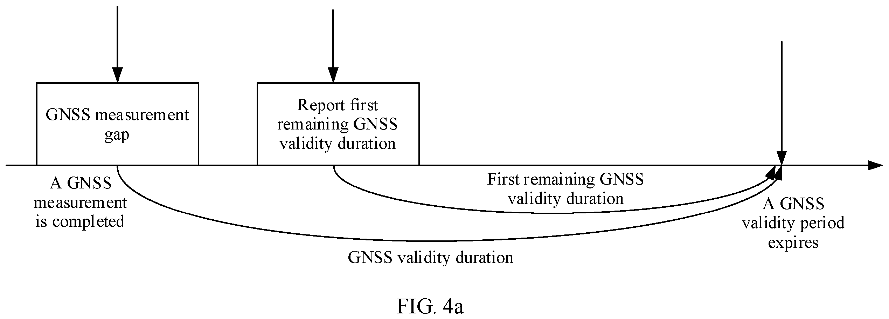

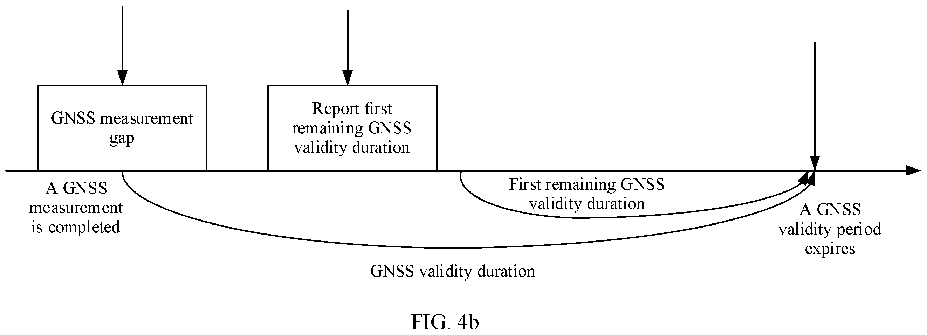

In an example, the first reference time may be determined based on a time of reporting the first duration information. For example, the first reference time may be a time of reporting the first duration information. FIG. 4a is a diagram of reporting first remaining GNSS validity duration according to an embodiment of this application. As shown in FIG. 4a, the terminal device may determine the first remaining GNSS validity duration by using, as the start time, the time at which the terminal device reports the first duration information. For another example, the first reference time may be a time, after the time of reporting the first duration information, that is determined by considering a transmission delay between the terminal device and the network device. FIG. 4b is another diagram of reporting first remaining GNSS validity duration according to an embodiment of this application. As shown in FIG. 4b, because a specific transmission delay is required for the network device to receive the first duration information, when determining the first remaining GNSS validity duration, the terminal device may consider a transmission delay between the terminal device and the network device. For example, a time after the first duration information is reported is used as the first reference time.

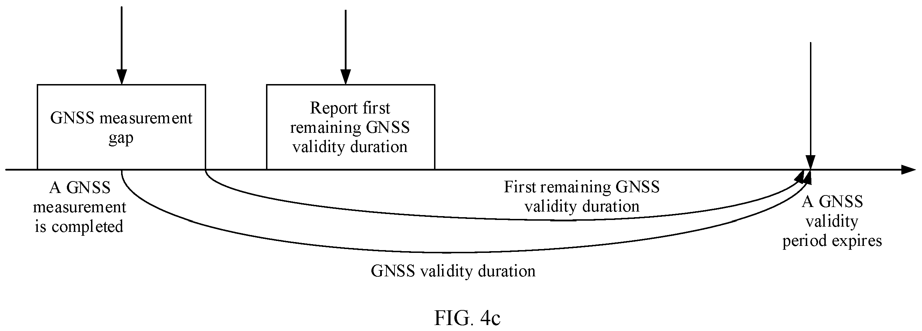

In another example, the first reference time may be an end time of the GNSS measurement gap. FIG. 4c is still another diagram of reporting first remaining GNSS validity duration according to an embodiment of this application. As shown in FIG. 4c, the terminal device may determine the first remaining GNSS validity duration by using the end time of the GNSS measurement gap as the start time.

The first remaining GNSS validity duration shown in FIG. 4a to FIG. 4c is less than the GNSS validity duration, and the end time of the first remaining GNSS validity duration is the same as an end time of the GNSS validity duration. In a specific implementation, the terminal device may alternatively prolong the GNSS validity duration based on a timing advance command (timing advance command, TAC) received by the terminal device, and then report the first duration information after prolonging the GNSS validity duration. In this case, the end time of the first remaining GNSS validity duration may be later than an end time of the initial GNSS validity duration. Therefore, the first reference time and the first remaining GNSS validity duration shown in FIG. 4a to FIG. 4c should not be construed as a limitation on this embodiment of this application.

The following describes specific content of the first duration information shown in this embodiment of this application.

In a possible implementation 1, the first duration information may include a value of the first remaining GNSS validity duration. In other words, the first duration information may directly carry the value of the first remaining GNSS validity duration. In another possible implementation 2, the first duration information may include an index of a value of the first remaining GNSS validity duration. For example, the first remaining GNSS validity duration may be any one of the following {10s, 20s, 30s, 40s, 50s, 60s, 100s, 5 min, 10 min, 15 min, 20 min, 25 min, 30 min, 60 min, 90 min, 120 min, infinity (infinity)}. For related descriptions of "infinity", refer to the foregoing descriptions of the GNSS validity duration. Details are not described herein again. The first remaining GNSS validity duration listed herein is merely an example. In a specific implementation, the first remaining GNSS validity duration may alternatively have another value. Examples are not enumerated herein. For example, the first duration information may include an index of 20s, or the first duration information may further carry 20s.

For the implementation 1 and the implementation 2, the second communication apparatus may directly learn of the first remaining GNSS validity duration by parsing the first duration information, to prepare to send GNSS measurement information to the terminal device before the GNSS expires, and schedule the terminal device to perform the GNSS measurement.

In still another possible implementation 3, the first duration information includes a difference between the end time of the first remaining GNSS validity duration and the end time of the initial GNSS validity duration. In still another possible implementation 4, the first duration information includes an index of a difference between the end time of the first remaining GNSS validity duration and the end time of the initial GNSS validity duration. For the implementation 3 and the implementation 4, the first duration information may further include the following information: information indicating that the end time of the first remaining GNSS validity duration is earlier than the end time of the initial GNSS validity duration, or information indicating that the end time of the first remaining GNSS validity duration is later than the end time of the initial GNSS validity duration. For example, the difference may include any one of the following {0s, 1s, 2s, 3s, 4s, 6s, 8s, 10s, 15s, 20s, 30s, 40s, 1 min, 2 min, 3 min, 5 min, 10 min, 20 min, 40 min}. 0 may indicate that the end time of the first remaining GNSS validity duration is the same as the end time of the initial GNSS validity duration.

For the implementation 3 and the implementation 4, the second communication apparatus may obtain the difference by parsing the first duration information, and then learn, based on the end time of the initial GNSS validity duration, of the end time of the first remaining GNSS validity duration indicated by the terminal device based on the first duration information, to prepare to send GNSS measurement information to the terminal device before the GNSS expires, and schedule the terminal device to perform the GNSS measurement.

In still another possible implementation 5, the first duration information may include a difference between the first remaining GNSS validity duration and reference GNSS validity duration. In still another possible implementation 6, the first duration information may include an index of a difference between the first remaining GNSS validity duration and reference GNSS validity duration. The reference GNSS validity duration may be the initial GNSS validity duration, GNSS validity duration broadcast or unicast by the network device, or the like. For the implementation 5 and the implementation 6, the first duration information may further include a 1-bit sign bit, and the sign bit may indicate a value relationship between the first remaining GNSS validity duration and the reference GNSS validity duration. For example, the sign bit may indicate that the first remaining GNSS validity duration is greater than the reference GNSS validity duration, or the first remaining GNSS validity duration is less than the reference GNSS validity duration.

For the implementation 5 and the implementation 6, the second communication apparatus may obtain the difference by parsing the first duration information, and then may learn, based on the reference GNSS validity duration, of the first remaining GNSS validity duration indicated by the terminal device based on the first duration information, to prepare to send GNSS measurement information to the terminal device before the GNSS expires, and schedule the terminal device to perform the GNSS measurement.

In this embodiment of this application, the first duration information may further indicate that the terminal device has completed the GNSS measurement, or indicate that the terminal device requests to perform the GNSS measurement.

For example, the first duration information may be included in a medium access control control element (medium access control control element, MAC CE), or included in physical layer data. Specific signaling used to carry the first duration information is not limited in this embodiment of this application. For example, the terminal device may carry the first duration information by using a physical random access channel (physical random access channel, PRACH), a physical uplink shared channel (physical uplink shared channel, PUSCH), or a physical uplink control channel (physical uplink control channel, PUCCH). A resource used to report the first duration information may be a dynamically scheduled resource, a semi-persistent resource, a PRACH resource, or the like. A channel or a resource used to report duration information is not limited in this embodiment of this application. Description related to the first duration information herein is also applicable to second duration information and third duration information shown below. Details are not described below again.

302: The first communication apparatus reports the second duration information when the GNSS validity duration changes. Correspondingly, the second communication apparatus receives the second duration information. The second duration information indicates second remaining GNSS validity duration of the first communication apparatus, and the second remaining GNSS validity duration is determined based on changed GNSS validity duration.

The following describes a change in the GNSS validity duration shown in this embodiment of this application.

After successfully measuring the GNSS, the terminal device may feed back the first remaining GNSS validity duration. However, if a speed of the terminal device changes greatly after the terminal device feeds back the GNSS validity duration, remaining validity duration is affected, especially when the GNSS validity duration becomes shorter. If the remaining GNSS validity duration is not updated in a timely manner, the network device cannot schedule a resource for the GNSS measurement in advance. Therefore, in this embodiment of this application, when the GNSS validity duration changes, the first communication apparatus may report duration information (namely, the second duration information) again. Usually, after the terminal device performs the GNSS measurement, a start time of the GNSS validity duration is fixed (for example, the start time of the GNSS validity duration is a start time of the initial GNSS validity duration). Therefore, that the GNSS validity duration changes may implicitly indicate that the end time of the GNSS validity duration changes.

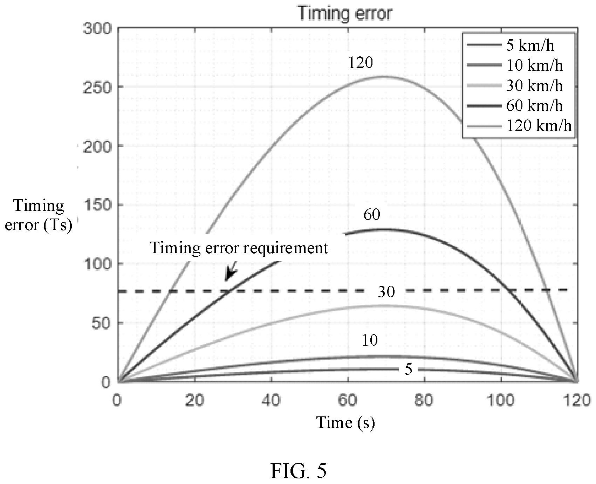

FIG. 5 is a diagram in which a speed changes and GNSS validity duration is affected according to an embodiment of this application. In FIG. 5, a horizontal coordinate represents time, a vertical coordinate represents a timing advance error, and a unit of the error is normalized to a sampling point. At 0s, the terminal device performs the GNSS measurement. Therefore, the error is equal to 0. As time goes by, the error becomes larger. If the speed is large, the error gradually exceeds a dashed line along a horizontal axis. The dashed line along the horizontal axis indicates an error requirement. An intersection point between the dashed line and a curve above the horizontal axis indicates the GNSS validity duration. When the intersection point is exceeded, it indicates that the GNSS information of the terminal device expires, and the error requirement is not met. A relative distance (namely, a change in the curve) between the terminal device and the satellite shown in FIG. 5 is merely an example, and should not be construed as a limitation on this embodiment of this application.

As shown in FIG. 5, when the speed of the terminal device is 120 km/h, the GNSS validity duration is exceeded after 15s (an intersection point between the dashed line along the horizontal axis and a curve corresponding to 120 km/h in FIG. 5). When the speed of the terminal device is 60 km/h, the GNSS validity duration is exceeded after approximately 30s (an intersection point between the dashed line along the horizontal axis and a curve corresponding to 60 km/h in FIG. 5). If the speed of the terminal device changes from 60 km/h to 120 km/h, the GNSS validity duration is shortened. Therefore, when the validity duration of the GNSS information changes because the moving speed of the terminal device changes greatly, the terminal device may notify, in a timely manner by reporting the second duration information, the network device that the GNSS validity duration needs to be updated, so that the network device can learn, in a timely manner, that the network device needs to schedule the resource for the GNSS measurement in advance, and the network device can schedule, in a timely manner, the terminal device to perform the GNSS measurement.

A case in which the GNSS validity duration changes may include at least one of the following:
(1) A change value of the GNSS validity duration is greater than a threshold.

That the change value of the GNSS validity duration is greater than the threshold includes: The GNSS validity duration becomes smaller, and the change value of the GNSS validity duration is greater than the threshold; or the GNSS validity duration is increased, and the change value of the GNSS validity duration is greater than the threshold.

Usually, when the terminal device reports the GNSS validity duration/the first remaining GNSS validity duration, the terminal device usually reports the GNSS validity duration/the first remaining GNSS validity duration in a conservative manner. Consequently, the GNSS validity duration/the first remaining GNSS validity duration is small. Therefore, when the change value of the GNSS validity duration is less than the threshold, even when the remaining GNSS validity duration is not reported, the terminal device and the network device may still be synchronized. The network device may still schedule the GNSS measurement for the terminal device within a time period expected by the terminal device. Therefore, the threshold is set, to effectively reduce signaling overheads, and reduce reporting resources.

(2) The GNSS validity duration becomes smaller.

When the GNSS validity duration becomes smaller, it indicates that GNSS validity duration/remaining GNSS validity duration reported by the terminal device last time needs to be updated, and the terminal device needs to report shortened GNSS validity duration (or shortened remaining GNSS validity duration) again.

When the GNSS validity duration becomes larger, it indicates that the terminal device may still maintain uplink synchronization with the network device in a period of time. Therefore, the second duration information is reported when the GNSS validity duration becomes smaller, so that the network device can learn in real time that the GNSS validity duration of the terminal device is shortened, and the network device can accurately schedule, in a timely manner, the terminal device to perform the GNSS measurement.

(3) The GNSS validity duration becomes larger.

When the GNSS validity duration becomes larger, it indicates that GNSS validity duration/remaining GNSS validity duration reported by the terminal device last time needs to be updated, and the terminal device needs to report prolonged GNSS validity duration (or shortened remaining GNSS validity duration) again. Therefore, the network device may not schedule, before an end time of original GNSS validity duration, the terminal device to perform the GNSS measurement, but may schedule, before an end time of new GNSS validity duration, the terminal device to perform the GNSS measurement.

(1) to (3) may be further combined. For example, that the GNSS validity duration changes may include: The GNSS validity duration becomes smaller, or the GNSS validity duration becomes larger and the change value is greater than the threshold; the GNSS validity duration becomes smaller and the change value is greater than the threshold; or the GNSS validity duration becomes larger; or the GNSS validity duration becomes smaller. For related descriptions of combinations, refer to (1) to (3). Details are not described herein again.

That the GNSS validity duration changes is shown by using a change status of the GNSS validity duration as an example. In a specific implementation, the change status of the GNSS validity duration may further include the following cases:
(4) The terminal device finds, based on detection of a downlink signal, that the speed of the terminal device changes, and the change value is greater than a speed threshold.

When the moving speed of the terminal device changes greatly, it may be considered that the GNSS validity duration of the terminal device also changes. For example, the terminal device may detect a Doppler frequency shift (for example, an actual Doppler frequency shift) (the Doppler frequency shift shown herein may also be a Doppler frequency offset, a Doppler time offset, or the like) by using the downlink signal, and calculate another Doppler frequency shift (for example, a Doppler frequency shift pre-estimated based on the GNSS information and ephemeris information) based on the ephemeris information and previous GNSS validity duration (the Doppler frequency shift shown herein may also be a Doppler frequency offset, a Doppler time offset, or the like). When a difference between the two Doppler frequency shifts is large (for example, exceeds a threshold), it is considered that the GNSS validity duration of the terminal device changes.

(5) The terminal device finds, based on detection of the downlink signal, that a relative speed (or a relative location) between the terminal device and the satellite changes, and the change value is greater than a relative speed threshold.

That the GNSS validity duration changes may be a determining criterion set by the terminal device based on a specific implementation, may be defined in a protocol, may be set by the network device, or the like. This is not limited in this embodiment of this application.

A condition for reporting the second duration information by the terminal device is set, to reduce reporting complexity of the terminal device.

The following describes the second remaining GNSS validity duration shown in this embodiment of this application.

The second remaining GNSS validity duration may be determined based on the changed GNSS validity duration. For related descriptions of the changed GNSS validity duration, refer to the foregoing descriptions. Details are not described herein again. For example, the second remaining GNSS validity duration may be determined based on the GNSS validity duration and a second reference time. The second reference time may be used to determine a start time or an end time of the second remaining GNSS validity duration. The second reference time may be defined in a protocol, or may be broadcast by the network device to each terminal device, or may be determined by the network device and then delivered to each terminal device. A manner of determining the first reference time and a manner of determining the second reference time may be consistent, for example, may be both defined in a protocol, or may be broadcast by the network device. Examples are not enumerated herein.

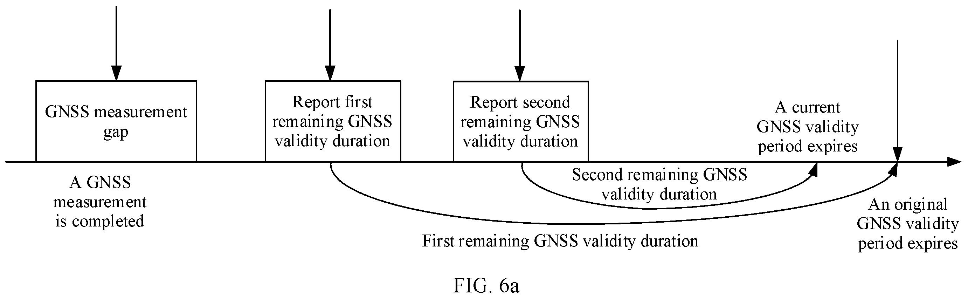

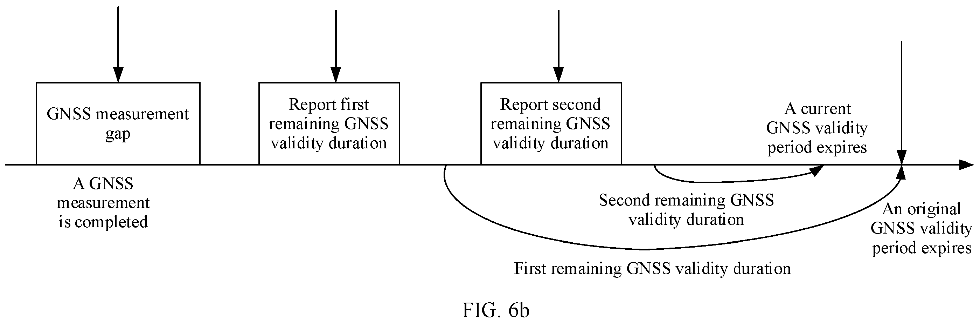

In an example, the second reference time may be determined based on a time of reporting the second duration information. For example, the second reference time may be a time of reporting the second duration information. FIG. 6a is a diagram of reporting second remaining GNSS validity duration according to an embodiment of this application. As shown in FIG. 6a, the terminal device may determine the second remaining GNSS validity duration by using, as the start time, the time at which the terminal device reports the second duration information. For another example, the second reference time may be a time, after the time of reporting the second duration information, that is determined by considering a transmission delay between the terminal device and the network device. FIG. 6b is another diagram of reporting second remaining GNSS validity duration according to an embodiment of this application. As shown in FIG. 6b, because a specific transmission delay is required for the network device to receive the second duration information, when determining the second remaining GNSS validity duration, the terminal device may consider a transmission delay between the terminal device and the network device. For example, a time after the second duration information is reported is used as the second reference time. In FIG. 6a and FIG. 6b, a reference time is determined based on a time of reporting duration information. To be specific, the second reference time is determined based on the time of reporting the second duration information, and the first reference time is determined based on the time of reporting the first duration information. However, in a specific implementation, the first reference time may alternatively not be consistent with the second reference time. For example, the first reference time may be the end time of the GNSS measurement gap, and the second reference time may be the time of reporting the second duration information. Examples are not enumerated herein.

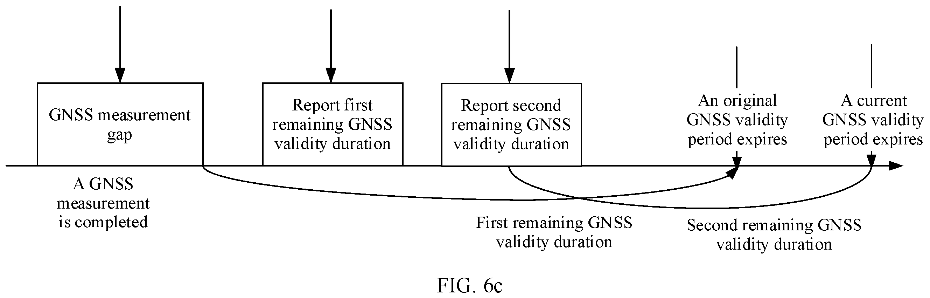

The second reference time shown in the foregoing example may be applied to smaller GNSS validity duration, or may be applied to larger GNSS validity duration. FIG. 6c is still another diagram of reporting second remaining GNSS validity duration according to an embodiment of this application. As shown in FIG. 6c, an end time of the changed GNSS validity duration may be later than the end time of the initial GNSS validity duration.

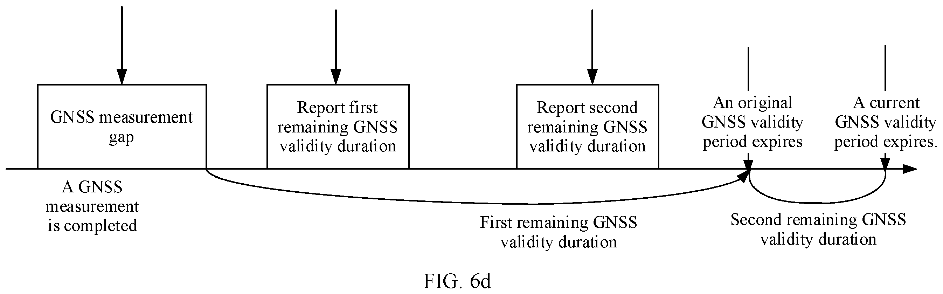

In another example, the second reference time is the end time of the first remaining GNSS validity duration. FIG. 6d is still another diagram of reporting second remaining GNSS validity duration according to an embodiment of this application. As shown in FIG. 6d, an end time of the changed GNSS validity duration may be later than the end time of the initial GNSS validity duration. In addition, for the second remaining GNSS validity duration, the validity duration starts to be calculated by using the end time of the first remaining GNSS validity duration as the start time.

In still another example, the second reference time may be the end time of the initial GNSS validity duration.

In still another example, the second reference time may be the end time of the remaining GNSS validity duration reported last time.

In this embodiment of this application, after the terminal device reports the first duration information and before the terminal device reports the second duration information, the terminal device may further report the third duration information. The third duration information indicates third remaining GNSS validity duration, and the third remaining GNSS validity duration is determined based on the changed GNSS validity duration. In other words, the terminal device may report the remaining GNSS validity duration for a plurality of times. For specific content of the third duration information, refer to the following descriptions of the second duration information. Details are not described herein again.

The second reference time shown above is merely an example. In a specific implementation, the second reference time may alternatively be another time. Examples are not enumerated in this embodiment of this application.

The following describes specific content of the second duration information shown in this embodiment of this application.

In a possible implementation 1, the second duration information may include a value of the second remaining GNSS validity duration. In other words, the second duration information may directly carry the value of the second remaining GNSS validity duration. In another possible implementation 2, the second duration information may include an index of a value of the second remaining GNSS validity duration. For example, the second remaining GNSS validity duration may be any one of the following {10s, 20s, 30s, 40s, 50s, 60s, 100s, 5 min, 10 min, 15 min, 20 min, 25 min, 30 min, 60 min, 90 min, 120 min, infinity (infinity)}. For related descriptions of "infinity", refer to the foregoing descriptions of the GNSS validity duration. Details are not described herein again. Herein, an example in which a possible value of the second remaining GNSS validity duration is the same as a possible value of the first remaining GNSS validity duration shown above is used for description. In a specific implementation, the possible value of the first remaining GNSS validity duration may be different from the possible value of the second remaining GNSS validity duration. Examples are not enumerated herein.

For the implementation 1 and the implementation 2, the second communication apparatus may directly learn of the second remaining GNSS validity duration by parsing the second duration information, to send the GNSS measurement information to the terminal device before the GNSS expires, and schedule the terminal device to perform the GNSS measurement.

In still another possible implementation 3, the second duration information includes a difference between the end time of the first remaining GNSS validity duration and the end time of the second remaining GNSS validity duration. In still another possible implementation 4, the second duration information includes an index of a difference between the end time of the first remaining GNSS validity duration and the end time of the second remaining GNSS validity duration. For the implementation 3 and the implementation 4, the second duration information may further include the following information: information indicating that the end time of the second remaining GNSS validity duration is earlier than the end time of the initial GNSS validity duration, or information indicating that the end time of the second remaining GNSS validity duration is later than the end time of the initial GNSS validity duration.

For the implementation 3 and the implementation 4, the second communication apparatus may obtain the difference by parsing the second duration information, and then learn, based on the end time of the initial GNSS validity duration, of the end time of the second remaining GNSS validity duration indicated by the terminal device based on the second duration information, to prepare to send the GNSS measurement information to the terminal device before the GNSS expires, and schedule the terminal device to perform the GNSS measurement.

In still another possible implementation 5, the second duration information may include a difference between the second remaining GNSS validity duration and reference GNSS validity duration. In still another possible implementation 6, the second duration information may include an index of a difference between the second remaining GNSS validity duration and reference GNSS validity duration. The reference GNSS validity duration may be the initial GNSS validity duration, or GNSS validity duration broadcast or unicast by the network device, or remaining GNSS validity duration reported last time, or initial GNSS validity duration obtained by the terminal device by performing the GNSS measurement last time, or GNSS validity duration/remaining GNSS validity duration reported for a first time after the terminal device performs the GNSS measurement last time, or the like. For the implementation 5 and the implementation 6, the second duration information may further include a 1-bit sign bit, and the sign bit may indicate a value of the second remaining GNSS validity duration and a value of the reference GNSS validity duration. For example, the sign bit may indicate that the second remaining GNSS validity duration is greater than the reference GNSS validity duration, or the second remaining GNSS validity duration is less than the reference GNSS validity duration.

For the implementation 5 and the implementation 6, the second communication apparatus may obtain the difference by parsing the second duration information, and then may learn, based on the reference GNSS validity duration, of the second remaining GNSS validity duration indicated by the terminal device based on the second duration information, to send the GNSS measurement information to the terminal device before the GNSS expires, and schedule the terminal device to perform the GNSS measurement.

For related descriptions of the implementation 3 to the implementation 6 in the second duration information, refer to the descriptions of the implementation 3 to the implementation 6 in the first duration information. Details are not described herein again. In the implementation 3 to the implementation 6, the second remaining GNSS validity duration is indicated by reporting the difference or the index of the difference, to further reduce signaling overheads.

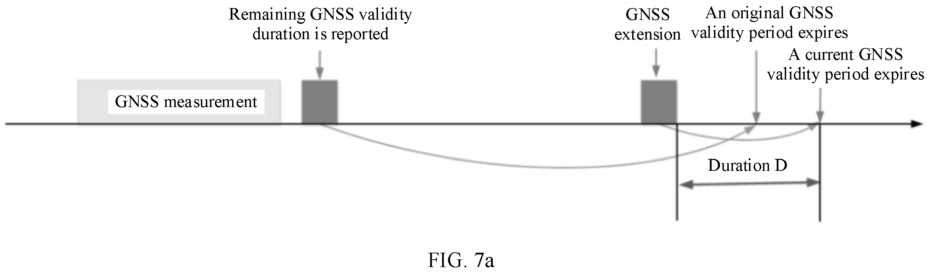

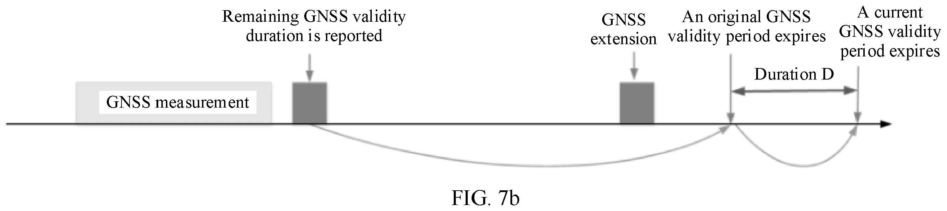

In still another possible implementation 7, the second duration information includes 1-bit indication information, the indication information indicates to shorten the first remaining GNSS validity duration (or the remaining GNSS validity duration reported last time), or the indication information indicates to prolong the first remaining GNSS validity duration (or the remaining GNSS validity duration reported last time), and the second remaining GNSS validity duration is D, where D is a real number greater than 0. When the indication information indicates to shorten the first remaining GNSS validity duration, the start time of the second remaining GNSS validity duration may be the second reference time shown in FIG. 6a to FIG. 6c, or the start time of the second remaining GNSS validity duration may be the end time of the first remaining GNSS validity duration (as shown in FIG. 6d), or an end time of the remaining GNSS validity duration reported last time, or an end time of GNSS validity duration determined based on the first remaining GNSS validity duration. For example, the indication information indicates that 0 indicates to shorten the first remaining GNSS validity duration. As shown in FIG. 7a, when receiving the indication information (a GNSS extension location shown in FIG. 7a), the second communication apparatus may learn that the second remaining GNSS validity duration is D (duration D shown in FIG. 7a) when the second communication apparatus receives the indication information (for example, the transmission delay is considered when the first communication apparatus sends the indication information). For another example, the indication information indicates that 1 indicates to prolong the first remaining GNSS validity duration. As shown in FIG. 7b, when receiving the indication information, the second communication apparatus may learn that the GNSS validity duration is prolonged by D based on the first remaining GNSS validity duration (as shown in FIG. 7b, the duration D is prolonged). In FIG. 7a and FIG. 7b, reporting the remaining GNSS validity duration may be reporting the first remaining GNSS validity duration, and the GNSS extension may be reporting the second remaining GSS validity duration. Herein, the related descriptions of the start time of the second remaining GNSS validity duration are also applicable to the following implementation 8 and the following implementation 9. Details are not described below again.

In still another possible implementation 8, the second duration information includes 1-bit indication information, the indication information indicates to shorten the initial GNSS validity duration, or the indication information indicates to prolong the initial GNSS validity duration, and the second remaining GNSS validity duration is D, where D is a real number greater than 0.

In still another possible implementation 9, the second duration information includes 1-bit indication information, the indication information indicates to shorten the GNSS validity duration determined based on the remaining GNSS validity duration reported last time, or the indication information indicates to prolong the GNSS validity duration determined based on the remaining GNSS validity duration reported last time, and the second remaining GNSS validity duration is D, where D is a real number greater than 0. Usually, the end time of the GNSS validity duration determined based on the remaining GNSS validity duration is the same as the end time of the remaining GNSS validity duration. Therefore, it may be considered that the implementation 7 and the implementation 9 are described from different aspects.

For the implementation 7 to the implementation 9, the second duration information includes 1-bit indication information. In this case, the second remaining GNSS validity duration may be predetermined duration (namely, D). A value of D may be defined in a protocol, broadcast by a network, or the like. A manner of setting D is not limited in this embodiment of this application.

In this embodiment of this application, the second duration information may be further used by the first communication apparatus to request to perform the GNSS measurement. In other words, the second duration information may not only indicate the second remaining GNSS validity duration, but also indicate the second communication apparatus to trigger, before the GNSS expires, the terminal device to perform the GNSS measurement.

In a possible implementation, the method shown in FIG. 3 may further include the following step.

303: The second communication apparatus sends the GNSS measurement information. Correspondingly, the first communication apparatus receives the GNSS measurement information. The GNSS measurement information is used to trigger the first communication apparatus to perform the GNSS measurement.

The second communication apparatus may send the GNSS measurement information within latest GNSS validity duration reported by the terminal device. In other words, the second communication apparatus may send the GNSS measurement information before the GNSS information expires. For example, the GNSS measurement information may be used to schedule the terminal device to perform the GNSS measurement. For example, the GNSS measurement information may carry the resource used by the terminal device to perform the GNSS measurement. The resource may include duration used to perform the GNSS measurement, the GNSS measurement gap, or the like. The terminal device performs the GNSS measurement on the resource used to perform the GNSS measurement, and continues to communicate with the network device after completing the GNSS measurement. For example, the terminal device may report the remaining GNSS validity duration in the method shown in step 301 and step 302 shown in FIG. 3.

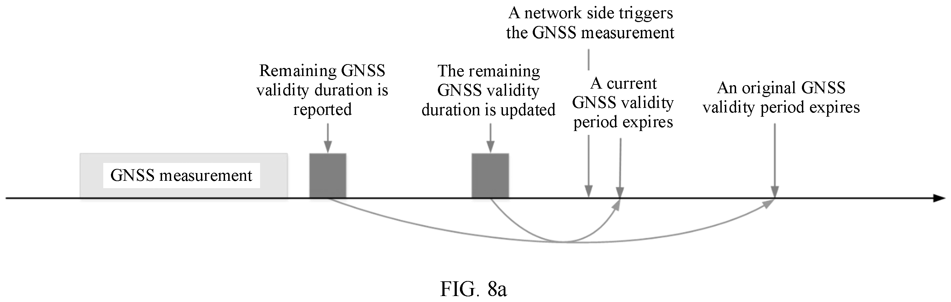

FIG. 8a is a diagram of a scenario of a satellite communication method according to an embodiment of this application. As shown in FIG. 8a, the terminal device may report the remaining GNSS validity duration for a plurality of times, for example, report the remaining GNSS validity duration and update the remaining GNSS validity duration as shown in FIG. 8a. Within the latest GNSS validity duration (as shown in FIG. 8a, before a current GNSS validity period expires), the network device may trigger the terminal device to perform the GNSS measurement.

In another possible implementation, the method shown in FIG. 3 may further include the following step.

304: When the GNSS measurement information is not received within the second remaining GNSS validity duration, the first communication apparatus starts a timer and performs the GNSS measurement; and when the GNSS measurement is completed within timing duration of the timer, continues to communicate with the second communication apparatus, where a start time of the timer is the end time of the second remaining GNSS validity duration.

When the GNSS measurement information is not received within the changed GNSS validity duration, the first communication apparatus may start the timer, and perform the GNSS measurement based on the timer. Alternatively, when the GNSS measurement information is not received within latest GNSS validity duration indicated by the second remaining GNSS validity duration, the first communication apparatus may start the timer, and perform the GNSS measurement based on the timer. A specific description manner of step 304 is not limited in this embodiment of this application. The start time in step 304 may also be referred to as a start moment, and the end time may also be referred to as an end moment.

The timing duration of the timer may be defined in a protocol, or may be configured by the network device for the terminal device by using RRC signaling or MAC-CE signaling. A start condition of the timer is that the terminal device does not receive the GNSS measurement information until the GNSS expires. The timer may be started at the end moment of the second remaining GNSS validity duration. The timing duration or a stop condition of the timer is not limited in this embodiment of this application. For example, the terminal device may alternatively determine the stop condition of the timer.

For example, the terminal device may communicate with the network device when the terminal device completes the GNSS measurement. Because the network device may not clearly learn of a time at which the terminal device completes the GNSS measurement, the network device may continuously attempt to perform uplink scheduling on the terminal device before the timing duration of the timer ends (when the network device receives an uplink signal sent by the terminal device, it may indicate that the terminal device has successfully completed the GNSS measurement), or the terminal device may initiate an uplink scheduling request after completing the GNSS measurement. In this manner, the terminal device can restore communication with the network device as early as possible.

For example, when the terminal device completes the GNSS measurement within the timing duration of the timer, the terminal device may report the new GNSS validity duration or the remaining GNSS validity duration after the end moment of the timer. For example, when the terminal device does not complete the GNSS measurement within the timing duration of the timer, the terminal device enters an idle state.

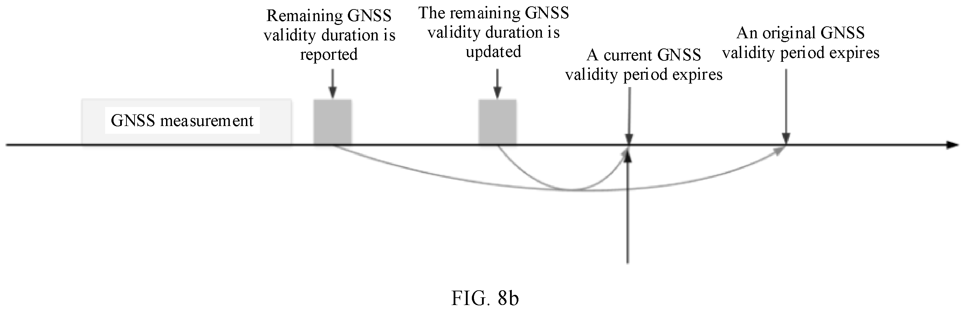

FIG. 8b is a diagram of a scenario of another satellite communication method according to an embodiment of this application. As shown in FIG. 8b, when the terminal device still does not receive the GNSS measurement information when the latest GNSS validity duration ends, the terminal device may automatically perform the GNSS measurement. For other descriptions of FIG. 8b, refer to FIG. 8a. Details are not described herein again.

In this embodiment of this application, when the second remaining GNSS validity duration ends and the GNSS measurement information is still not received, the terminal device may automatically start the timer to perform the GNSS measurement. This can further reduce a quantity of disconnections of the terminal device, and further increase duration of communication between the terminal device and the network device.

In still another possible implementation, the method shown in FIG. 3 may further include the following step.

305: The first communication apparatus enters the idle state when the GNSS measurement information is not received within the second remaining GNSS validity duration.

For example, after entering the idle state, the terminal device may perform the GNSS measurement in the idle state, and then re-initiate random access.

Step 303, step 304, and step 305 may be parallel solutions. In a specific implementation, in some scenarios, the terminal device and the network device may perform the method shown in step 303. In some other scenarios, the terminal device may perform the method shown in step 304. In some other scenarios, the terminal device may perform the method shown in step 305. The satellite communication method shown in this embodiment of this application may include step 301 to step 303; or include step 301, step 302, and step 304; or include step 301, step 302, and step 305; or include step 301 to step 304; or include step 301 to step 303, and step 305, or the like. Examples are not enumerated herein. A quantity of times of performing step 302 is not limited in this embodiment of this application. In a specific implementation, after completing one GNSS measurement, the terminal device may update the remaining GNSS validity duration for a plurality of times based on the changed GNSS validity duration.

In this embodiment of this application, on a basis of implementing uplink synchronization by the terminal device, communication duration of the terminal device can be increased (or referred to as that duration in which the terminal device is in a connected state is increased), so that the terminal device can implement long-time communication. In this way, signaling overheads generated when the terminal device continuously enters the connected state and exits the connected state can be further avoided. Therefore, signaling overheads are reduced.

The method in FIG. 3 shown above may be combined in various manners. For example, any implementation of the first duration information may be combined with any implementation of the second duration information. For another example, any example of the first reference time may be combined with any example of the second reference time. For another example, any example of the first remaining GNSS validity duration may be combined with any example of the second remaining GNSS validity duration. The following describes two combined embodiments as examples, but the two embodiments shown below should not be construed as a limitation on the embodiments of this application.

### Embodiment 1

(11) Each time a terminal device completes a GNSS measurement, the terminal device may report remaining GNSS validity duration, and the reported remaining GNSS validity duration implicitly indicates that the terminal device completes the GNSS measurement.

For related descriptions of the remaining GNSS validity duration shown in (11), refer to the foregoing descriptions of the first duration information or the first remaining GNSS validity duration. Details are not described herein again.

(12) When the terminal device finds, based on detection of a downlink signal, that a speed of the terminal device changes greatly, the terminal device is allowed to report the remaining GNSS validity duration again after reporting the remaining GNSS validity duration for one time.

When the terminal device finds, based on detection of the downlink signal, that the speed of the terminal device changes greatly, it indicates that the GNSS validity duration of the terminal device changes. For related descriptions of the change, refer to the foregoing descriptions about the change in the GNSS validity duration. Details are not described herein again. The speed change shown herein is merely an example, and should not be construed as a limitation on this embodiment of this application.

For related descriptions of the remaining GNSS validity duration reported by the terminal device again, refer to the foregoing descriptions of the second duration information or the second remaining GNSS validity duration. Details are not described herein again.

(13) A network device stores remaining GNSS validity duration reported by the terminal device last time, for scheduling of a next GNSS measurement. When receiving new remaining GNSS validity duration reported by the terminal device, the network device may schedule, based on the new remaining GNSS validity duration reported by the terminal device, the terminal device to perform the next GNSS measurement.

For example, the network device learns, based on the remaining GNSS validity duration reported by the terminal device last time, that current remaining validity duration is 20s. When the remaining GNSS validity duration reported by the terminal device again is 10s, it indicates that the terminal device expects, based on determining of the terminal device, that the network device may schedule one GNSS measurement for the terminal device within 10s.

For example, GNSS validity duration reported by the terminal device after the GNSS measurement is 10s, and the GNSS validity duration subsequently changes. For example, when changed GNSS validity duration is 8s, the terminal device may report an offset of 2s (referring to the implementation 3 to the implementation 6).

After receiving the new remaining GNSS validity duration reported by the terminal device, the network device may further refresh the remaining GNSS validity duration, or store the new remaining GNSS validity duration, and delete the remaining GNSS validity duration reported by the terminal device last time.

For related descriptions of (13), refer to the descriptions of step 303. Details are not described herein again.

(14) If the terminal device does not receive GNSS measurement information of the network device within an expected time period (for example, before an end time of the GNSS validity duration), the terminal device may directly enter an idle state; or the terminal device may start a timer for an autonomous GNSS measurement, and perform the GNSS measurement within the timer.

For related descriptions of (14), refer to step 304 and step 305. Details are not described herein again.

In this embodiment of this application, when a moving status changes, the terminal device reports the remaining GNSS validity duration, so that the network device can learn of more accurate remaining GNSS validity duration. In this way, not only a time at which the GNSS measurement is expected by the terminal device to be performed is accurately indicated to the network device in a timely manner, but also the terminal device may refresh the GNSS validity duration by performing the GNSS measurement, to ensure synchronization between the terminal device and the network device, and ensure that the terminal device can continue to communicate with the network device, thereby increasing communication duration of the terminal device.

### Embodiment 2

(21) Each time a terminal device completes a GNSS measurement, the terminal device may report remaining GNSS validity duration, and the reported remaining GNSS validity duration implicitly indicates that the terminal device completes the GNSS measurement.

For related descriptions of the remaining GNSS validity duration shown in (21), refer to the foregoing descriptions of the first duration information or the first remaining GNSS validity duration. Details are not described herein again.

(22) If the terminal device needs to refresh the remaining GNSS validity duration, for example, the terminal device finds that a moving status may change greatly, and needs to perform the GNSS measurement in advance, the terminal device may initiate a GNSS request within a time period D before the GNSS measurement is expected to be performed.

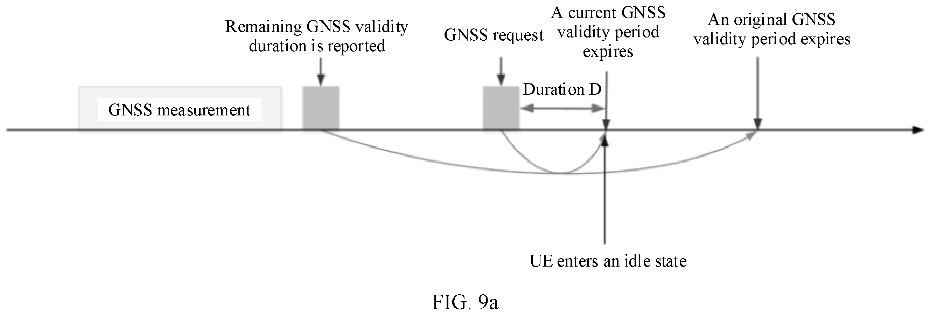

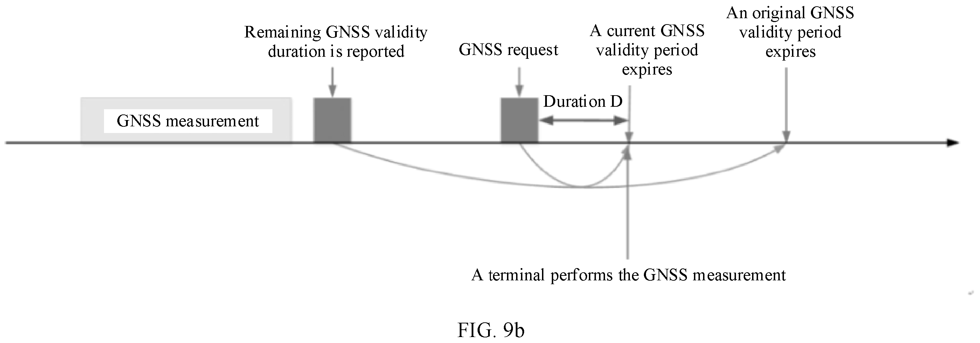

For related descriptions of (22), refer to the foregoing descriptions of the implementation 7 to the implementation 9. As shown in FIG. 9a and FIG. 9b, the terminal device may send the GNSS request when duration D remains in the GNSS validity duration, to request the network device to trigger the terminal device to perform the GNSS measurement. For related descriptions of FIG. 9a and FIG. 9b, refer to FIG. 8a and FIG. 8b. Details are not described herein again. The GNSS request may be updating the remaining GNSS validity duration as shown in FIG. 8a and FIG. 8b, or the foregoing second duration information.

To reduce, as much as possible, signaling overheads of reporting prolonging and shortening of the remaining GNSS validity duration by the terminal device, the GNSS request may include 1-bit indication information. For related descriptions of the 1-bit indication information, refer to the implementation 7 to the implementation 9. Details are not described herein again.

(23) When receiving the GNSS request of the terminal device, the network device may schedule, within the duration D after the GNSS request, the terminal device to perform a next GNSS measurement.

For related descriptions of (23), refer to step 303. Details are not described herein again.

(24) If the terminal device does not receive GNSS measurement information of the network device within the time period D, a behavior of the terminal device may have the following manners:
(1) The terminal device may directly enter an idle state, as shown in FIG. 9a.
(2) The terminal device starts a timer for an autonomous GNSS measurement after the time period D after initiating the GNSS request, as shown in FIG. 9b.

For related descriptions of (24), refer to step 304 and step 305. Details are not described herein again.

In this embodiment of this application, the terminal device may indicate second remaining GNSS validity duration by reporting the 1-bit indication information. In this way, signaling overheads of reporting by the terminal device are further reduced. In addition, synchronization between the terminal device and the network device is ensured, and it is ensured that the terminal device can continue to communicate with the network device, thereby increasing communication duration of the terminal device.

The first duration information and the second duration information shown above are shown by using an example in which the terminal device reports the remaining GNSS validity duration. In a specific implementation, the terminal device may report the GNSS validity duration. For example, the first duration information may indicate the first GNSS validity duration, and the second duration information may indicate the second GNSS validity duration. The first GNSS validity duration may be the initial GNSS validity duration or changed GNSS validity duration after the initial GNSS validity duration changes. The second GNSS validity duration may be the changed GNSS validity duration. In this case, for related descriptions of indicating the first GNSS validity duration, refer to the foregoing related descriptions of indicating the first remaining GNSS validity duration. For related descriptions of indicating the second GNSS validity duration, refer to the foregoing related descriptions of indicating the second remaining GNSS validity duration. Alternatively, for related descriptions of indicating the first GNSS validity duration or the second GNSS validity duration, refer to the foregoing related descriptions of the GNSS validity duration. Details are not described herein again.

In a specific implementation, the network device may alternatively schedule the terminal device to report the remaining GNSS validity duration or the GNSS validity duration. For example, the network device may send trigger information to the terminal device, and the trigger information may be used to trigger the terminal device to report the remaining GNSS validity duration/the GNSS validity duration. The terminal device receives the trigger information, and then reports the remaining GNSS validity duration/the GNSS validity duration. For a specific manner in which the terminal device reports the remaining GNSS validity duration/the GNSS validity duration, refer to the foregoing descriptions of the first duration information and the second duration information, or refer to the foregoing descriptions of the first remaining GNSS validity duration and the second remaining GNSS validity duration. Details are not described herein again.

The following describes communication apparatuses provided in embodiments of this application.

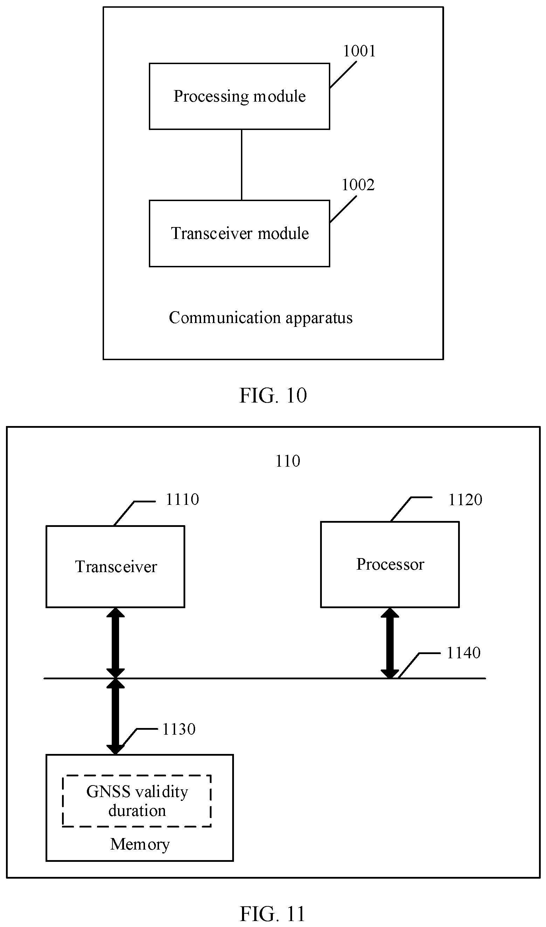

In this application, the communication apparatus may be divided into functional modules based on the method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, division into modules is an example, and is merely a logical functional division. In an actual implementation, another division manner may be used. The following describes in detail the communication apparatuses in embodiments of this application with reference to FIG. 10 to FIG. 12.

FIG. 10 is a diagram of a structure of a communication apparatus according to an embodiment of this application. As shown in FIG. 10, the communication apparatus includes a processing module 1001 and a transceiver module 1002. The transceiver module 1002 may implement a corresponding communication function, and the processing module 1001 is configured to perform data processing. For example, the transceiver module 1002 may also be referred to as an interface, a communication interface, or a communication unit.

In some embodiments of this application, the communication apparatus may be configured to perform actions performed by a terminal device in the foregoing method embodiments. In this case, the communication apparatus may be the terminal device, or a component (for example, a chip, a system, or a functional module) configured in the terminal device. The transceiver module 1002 is configured to perform a receiving/sending-related operation of the terminal device in the foregoing method embodiments, and the processing module 1001 is configured to perform a processing-related operation of the terminal device in the foregoing method embodiments.

For example, the transceiver module 1002 is configured to: report or output first duration information, and report or output second duration information.

For example, the processing module 1001 is further configured to: determine first remaining GNSS validity duration, and determine second remaining GNSS validity duration.

For example, the transceiver module 1002 is further configured to input or receive GNSS measurement information.

For example, the processing module 1001 is further configured to start a timer.

Still as shown in FIG. 10, in some other embodiments of this application, the communication apparatus may be configured to perform actions performed by a network device in the foregoing method embodiments. In this case, the communication apparatus may be the network device, or a component (for example, a chip, a system, or a functional module) configured in the network device. The transceiver module 1002 is configured to perform a receiving/sending-related operation of the network device in the foregoing method embodiments, and the processing module 1001 is configured to perform a processing-related operation of the network device in the foregoing method embodiments.

For example, the transceiver module 1002 is configured to: input or receive first duration information, and input or receive second duration information.

The processing module 1001 is configured to determine second remaining GNSS validity duration based on the second duration information.

The transceiver module 1002 is further configured to output or send GNSS measurement information.

Optionally, in the foregoing embodiments, the communication apparatus may further include a storage unit. The storage unit may be configured to store instructions and/or data. The processing module 1001 may read the instructions and/or the data in the storage unit, so that the communication apparatus implements the foregoing method embodiments. For example, the storage unit may be configured to store remaining GNSS validity duration or changed GNSS validity duration, a difference, an index, or the like.

In the foregoing embodiments, for descriptions of the first remaining GNSS validity duration, the second remaining GNSS validity duration, initial GNSS validity duration, a first reference time, a second reference time, a GNSS measurement gap, third GNSS validity duration, and the like, refer to the descriptions in the foregoing method embodiments. Details are not described herein again.

It may be understood that specific descriptions of the transceiver unit and the processing unit in the foregoing embodiments are merely examples. For specific functions, steps, or the like performed by the transceiver unit and the processing unit, refer to the foregoing method embodiments. Details are not described herein again.

The foregoing describes the communication apparatus in this embodiment of this application. The following describes possible product forms of the communication apparatus. It should be understood that any form of product that has a function of the communication apparatus in FIG. 10 falls within the protection scope of embodiments of this application. It should be further understood that the following descriptions are merely an example, and do not limit a product form of the communication apparatus in embodiments of this application.

In a possible implementation, in the communication apparatus shown in FIG. 10, the processing module 1001 may be one or more processors, and the transceiver module 1002 may be a transceiver, or the transceiver module 1002 may be a sending unit and a receiving unit. The sending unit may be a transmitter, and the receiving unit may be a receiver. The sending unit and the receiving unit are integrated into one device, for example, a transceiver. In embodiments of this application, the processor and the transceiver may be coupled, or the like. A connection manner of the processor and the transceiver is not limited in embodiments of this application. In a process of performing the foregoing method, a process of sending information in the foregoing method may be understood as a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information into the processor. Further, after the transceiver receives the information, other processing may need to be performed on the information before processed information is input into the processor.

As shown in FIG. 11, a communication apparatus 110 includes one or more processors 1120 and a transceiver 1110.

For example, the transceiver 1110 is configured to perform functions or steps implemented by the transceiver module 1002 shown in FIG. 10, and the processor 1120 is configured to perform functions or steps implemented by the processing module 1001 shown in FIG. 10. For specific descriptions of the processor 1120 and the transceiver 1110, refer to FIG. 10 or the foregoing method embodiments. Details are not described herein again.

In the foregoing embodiments, for descriptions of a first remaining GNSS validity duration, a second remaining GNSS validity duration, initial GNSS validity duration, a first reference time, a second reference time, a GNSS measurement gap, third GNSS validity duration, and the like, refer to the descriptions in the foregoing method embodiments. Details are not described herein again.

In each implementation of the communication apparatus shown in FIG. 11, the transceiver may include a receiver and a transmitter. The receiver is configured to perform a receiving function (or operation), and the transmitter is configured to perform a transmitting function (or operation). The transceiver is configured to communicate with another device/apparatus through a transmission medium.

Optionally, the communication apparatus 110 may further include one or more memories 1130, configured to store program instructions and/or data. The memory 1130 is coupled to the processor 1120. The coupling in this embodiment of this application may be an indirect coupling or a communication connection between apparatuses, units, or modules in an electrical form, a mechanical form, or another form, and is used for information exchange between the apparatuses, the units, or the modules. The processor 1120 may collaboratively operate with the memory 1130. The processor 1120 may execute the program instructions stored in the memory 1130. Optionally, at least one of the one or more memories may be included in the processor. In this embodiment of this application, the memory 1130 may store GNSS validity duration, a difference, an index, and the like. For example, the memory shown in FIG. 11 shows only the GNSS validity duration as an example.

In this embodiment of this application, a specific connection medium among the transceiver 1110, the processor 1120, and the memory 1130 is not limited. In this embodiment of this application, in FIG. 11, the memory 1130, the processor 1120, and the transceiver 1110 are connected to each other through a bus 1140. The bus is represented by using a thick line in FIG. 11. A manner of connection between other components is only schematically described, but is not used as a limitation. The bus may be classified into an address bus, a data bus, a control bus, and the like. For ease of representation, only one thick line is used to represent the bus in FIG. 11, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor, any conventional processor, or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this is not limited thereto. The memory in this embodiment of this application may alternatively be a circuit or any other apparatus that can implement a storage function, and is configured to store the program instructions and/or the data.

The processor 1120 is mainly configured to process a communication protocol and communication data, control the entire communication apparatus, execute a software program, and process data of the software program. The memory 1130 is mainly configured to store the software program and the data. The transceiver 1110 may include a control circuit and an antenna. The control circuit is mainly configured to convert a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1120 may read the software program from the memory 1130, interpret and execute instructions of the software program, and process data of the software program. When data needs to be sent wirelessly, the processor 1120 performs baseband processing on the to-be-sent data, and then outputs a baseband signal to a radio frequency circuit. The radio frequency circuit performs radio frequency processing on the baseband signal, and then sends, by using the antenna, a radio frequency signal in an electromagnetic wave form. When data is sent to the communication apparatus, the radio frequency circuit receives a radio frequency signal through the antenna, converts the radio frequency signal into a baseband signal, and outputs the baseband signal to the processor 1120. The processor 1120 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

It may be understood that the communication apparatus shown in embodiments of this application may further have more components and the like than those in FIG. 11. This is not limited in embodiments of this application. The methods performed by the processor and the transceiver are merely examples. For specific steps performed by the processor and the transceiver, refer to the methods described above.

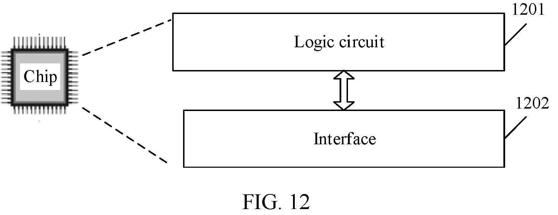

In another possible implementation, in the communication apparatus shown in FIG. 10, the processing module 1001 may be one or more logic circuits, and the transceiver module 1002 may be an input/output interface that is also referred to as a communication interface, an interface circuit, an interface, or the like. Alternatively, the transceiver module 1002 may be a sending unit and a receiving unit. The sending unit may be an output interface, and the receiving unit may be an input interface. The sending unit and the receiving unit are integrated into one unit, for example, an input/output interface. As shown in FIG. 12, a communication apparatus shown in FIG. 12 includes a logic circuit 1201 and an interface 1202. In other words, the processing module 1001 may be implemented through the logic circuit 1201, and the transceiver module 1002 may be implemented through the interface 1202. The logic circuit 1201 may be a chip, a processing circuit, an integrated circuit, a system on chip (system on chip, SoC), or the like. The interface 1202 may be a communication interface, an input/output interface, a pin, or the like. For example, FIG. 12 shows an example in which the communication apparatus is a chip. The chip includes a logic circuit 1201 and an interface 1202.

In this embodiment of this application, the logic circuit and the interface may be coupled to each other. A specific connection manner between the logic circuit and the interface is not limited in this embodiment of this application. For example, the logic circuit 1201 may be configured to perform the functions or the steps implemented by the processing module 1001 shown in FIG. 10, and the interface 1202 may be configured to perform the functions or the steps implemented by the transceiver module 1002 shown in FIG. 10. For specific descriptions of the logic circuit 1201 and the interface 1202, refer to FIG. 10 or the foregoing method embodiments. Details are not described herein again.

For example, the chip shown in FIG. 12 may further include a memory. The memory may be configured to store GNSS validity duration, a difference, an index, and the like.

It may be understood that the communication apparatus shown in embodiments of this application may implement the method provided in embodiments of this application in a form of hardware, or may implement the method provided in embodiments of this application in a form of software. This is not limited in embodiments of this application.

In the foregoing embodiments, for descriptions of a first remaining GNSS validity duration, a second remaining GNSS validity duration, initial GNSS validity duration, a first reference time, a second reference time, a GNSS measurement gap, third GNSS validity duration, and the like, refer to the descriptions in the foregoing method embodiments. Details are not described herein again.

For specific implementations of the embodiments shown in FIG. 12, refer to the foregoing embodiments. Details are not described herein again.

An embodiment of this application further provides a wireless communication system. The wireless communication system includes a first communication apparatus and a second communication apparatus. The first communication apparatus and the second communication apparatus may be configured to perform the method in any one of the foregoing embodiments.

In addition, this application further provides a computer program. The computer program is used to implement operations and/or processing performed by the first communication apparatus device in the methods provided in this application.

This application further provides a computer program. The computer program is used to implement operations and/or processing performed by the second communication apparatus device in the methods provided in this application.

This application further provides a computer-readable storage medium. The computer-readable storage medium stores computer code. When the computer code is run on a computer, the computer is enabled to perform operations and/or processing performed by the first communication apparatus device in the methods provided in this application.

This application further provides a computer-readable storage medium. The computer-readable storage medium stores computer code. When the computer code is run on a computer, the computer is enabled to perform operations and/or processing performed by the second communication apparatus device in the methods provided in this application.

This application further provides a computer program product. The computer program product includes computer code or a computer program. When the computer code or the computer program is run on a computer, operations and/or processing performed by the first communication apparatus device in the methods provided in this application are/is performed.

This application further provides a computer program product. The computer program product includes computer code or a computer program. When the computer code or the computer program is run on a computer, operations and/or processing performed by the second communication apparatus device in the methods provided in this application are/is performed.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to an actual requirement to achieve the technical effects of the solutions provided in embodiments of this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in a form of a software product. The computer software product is stored in a readable storage medium, and includes several instructions for instructing a computer device (which may be a personal computer, a server, a network device, or the like) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A satellite communication method, wherein the method is applied to a first communication apparatus, and the method comprises:
reporting first duration information, wherein the first duration information indicates first remaining global navigation satellite system GNSS validity duration of the first communication apparatus, and the first remaining GNSS validity duration is determined based on GNSS validity duration of the first communication apparatus; and
reporting second duration information when the GNSS validity duration changes, wherein the second duration information indicates second remaining GNSS validity duration of the first communication apparatus, and the second remaining GNSS validity duration is determined based on changed GNSS validity duration.

2. The method according to claim 1, wherein that the GNSS validity duration changes comprises at least one of the following cases: a change value of the GNSS validity duration is greater than a threshold, and the GNSS validity duration becomes smaller.

3. The method according to claim 1 or 2, wherein
the second duration information comprises a value of the second remaining GNSS validity duration, or an index of the value of the second remaining GNSS validity duration; or
the second duration information comprises a difference between an end time of the first remaining GNSS validity duration and an end time of the second remaining GNSS validity duration, or an index of the difference; or
the second duration information comprises 1-bit indication information, the indication information indicates to shorten the first remaining GNSS validity duration, or the indication information indicates to prolong the first remaining GNSS validity duration, and the second remaining GNSS validity duration is D, wherein D is a real number greater than 0.

4. The method according to any one of claims 1 to 3, wherein the first remaining GNSS validity duration is determined based on the GNSS validity duration and a first reference time.

5. The method according to any one of claims 1 to 4, wherein the second remaining GNSS validity duration is determined based on the GNSS validity duration and a second reference time.

6. The method according to claim 5, wherein the second reference time is determined based on a time of reporting the second duration information, or the second reference time is the end time of the first remaining GNSS validity duration.

7. The method according to any one of claims 1 to 6, wherein the second duration information is further used by the first communication apparatus to request to perform a GNSS measurement.

8. The method according to any one of claims 1 to 7, wherein the method further comprises:
entering an idle state when GNSS measurement information is not received within the second remaining GNSS validity duration, wherein the GNSS measurement information is used to trigger the first communication apparatus to perform the GNSS measurement; or
when GNSS measurement information is not received within the second remaining GNSS validity duration, starting a timer and performing the GNSS measurement; and when the GNSS measurement is completed within timing duration of the timer, continuing to communicate with the second communication apparatus, wherein a start time of the timer is the end time of the second remaining GNSS validity duration.

9. The method according to any one of claims 1 to 7, wherein the method further comprises:
performing the GNSS measurement when GNSS measurement information is received within the second remaining GNSS validity duration, wherein the GNSS measurement information is used to trigger the first communication apparatus to perform the GNSS measurement.

10. A satellite communication method, wherein the method is applied to a second communication apparatus, and the method comprises:
receiving first duration information, wherein the first duration information indicates first remaining global navigation satellite system GNSS validity duration of a first communication apparatus, and the first remaining GNSS validity duration is determined based on GNSS validity duration of the first communication apparatus; and
receiving second duration information, wherein the second duration information indicates second remaining GNSS validity duration of the first communication apparatus, and the second remaining GNSS validity duration is determined based on changed GNSS validity duration.

11. The method according to claim 10, wherein the method further comprises:
sending GNSS measurement information within the second remaining GNSS validity duration indicated by the second duration information, wherein the GNSS measurement information is used to trigger the first communication apparatus to perform a GNSS measurement.

12. The method according to claim 10 or 11, wherein
the second duration information comprises a value of the second remaining GNSS validity duration, or an index of the value of the second remaining GNSS validity duration; or
the second duration information comprises a difference between an end time of the first remaining GNSS validity duration and an end time of the second remaining GNSS validity duration, or an index of the difference; or
the second duration information comprises 1-bit indication information, the indication information indicates to shorten the first remaining GNSS validity duration, or the indication information indicates to prolong the first remaining GNSS validity duration, and the second remaining GNSS validity duration is D, wherein D is a real number greater than 0.

13. The method according to any one of claims 10 to 12, wherein the first remaining GNSS validity duration is determined based on the GNSS validity duration and a first reference time.

14. The method according to any one of claims 10 to 13, wherein the second remaining GNSS validity duration is determined based on the GNSS validity duration and a second reference time.

15. The method according to claim 14, wherein the second reference time is determined based on a time of reporting the second duration information, or the second reference time is the end time of the first remaining GNSS validity duration.

16. The method according to any one of claims 10 to 15, wherein that the GNSS validity duration changes comprises at least one of the following cases: a change value of the GNSS validity duration is greater than a threshold, and the GNSS validity duration becomes smaller.

17. The method according to any one of claims 10 to 16, wherein the second duration information is further used by the first communication apparatus to request to perform the GNSS measurement.

18. A communication apparatus, comprising a module configured to perform the method according to any one of claims 1 to 9, or a module configured to perform the method according to any one of claims 10 to 17.

19. A communication apparatus, comprising a processor, wherein the processor is configured to perform the method according to any one of claims 1 to 9, or the processor is configured to perform the method according to any one of claims 10 to 17.

20. A communication apparatus, comprising a logic circuit and an interface, wherein the logic circuit is coupled to the interface, the interface is configured to input and/or output information, and the logic circuit is configured to perform the method according to any one of claims 1 to 9, or the logic circuit is configured to perform the method according to any one of claims 10 to 17.

21. A computer-readable storage medium, wherein the computer-readable storage medium is configured to store a computer program, and when the computer program is executed, the method according to any one of claims 1 to 9 is performed, or the method according to any one of claims 10 to 17 is performed.

22. A computer program product, wherein the computer program product comprises a computer program, and when the computer program is executed, the method according to any one of claims 1 to 9 is performed, or the method according to any one of claims 10 to 17 is performed.

23. A communication system, wherein the communication system comprises a first communication apparatus and a second communication apparatus, the first communication apparatus is configured to perform the method according to any one of claims 1 to 9, and the second communication apparatus is configured to perform the method according to any one of claims 10 to 17.
